# NEUE EUROPÄISCHE PATENTSCHRIFT

(11) **EP 2 554 868 B2**
(45) Veröffentlichungstag und Bekanntmachung des Hinweises auf die Entscheidung über den Einspruch: **17.01.2024**
(45) Hinweis auf die Patenterteilung: 06.05.2015
(21) Anmeldenummer: 12005193.3
(22) Anmeldetag: 13.07.2012
(51) Int. Cl.: F16D 25/08

(54) **Ausrücksystem**
Clutch actuator
dispositif de débrayage

(30) Priorität: 05.08.2011 DE 102011080544; 07.05.2012 DE 102012207542; 14.06.2012 DE 102012209943
(43) Veröffentlichungstag der Anmeldung: 06.02.2013
(73) Patentinhaber: Schaeffler Technologies AG & Co. KG, 91074 Herzogenaurach (DE)
(72) Erfinder: Sester, Christof, 77723 Gengenbach (DE); Krahtov, Luben, 76530 Baden-Baden (DE); Lörch, Herbert, 76547 Sinzheim (DE); Bella, Ronald, 76437 Rastatt (DE); Burgstahler, Dominic, 76870 Kandel (DE); Bosnjak, Daniel, 67470 Seltz (FR); Malitourne, Jerome, 67410 Drusenheim (FR)

(56) Entgegenhaltungen:
- EP-A1- 1 677 020
- EP-A2- 0 964 191
- EP-B1- 0 185 176
- DE-A1- 10 138 722
- DE-A1- 199 500 540
- DE-A1-102009 034 399
- DE-A1-102009 053 486
- DE-A1-102010 023 715
- DE-A1-102010 032 661
- DE-A1-102010 052 387
- FR-A1- 2 699 627
- FR-A1- 2 780 121
- FR-A1- 2 780 123
- FR-A1- 2 782 482
- US-A- 4 577 549
- US-A- 4 821 627
- US-A1- 2005 217 963
- US-A1- 2011 048 887
- Bernard J. Hamrock and William J. Anderson, ?Rolling-Element Bearings', NASA Reference Publication 1105. June 1983

## Beschreibung

Die Erfindung betrifft ein Ausrücksystem zur Betätigung einer Kupplung nach dem Oberbegriff des ersten Patentanspruchs.

Ein Kupplungsausrücksystem besteht im Wesentlichen aus einem Gehäuse, in dem ein mit einem Ausrücklager bzw. Einrücklager verbundener Kolben axial geführt wird. Da dieses Aus/ Einrücklager mit der Beaufschlagungseinrichtung der Reibungskupplung in Wirkverbindung steht, werden Schleppmomente von der Antriebseinheit des Fahrzeuges kommend auf das Einrücklager übertragen. Durch diese Schleppmomente neigt der sich drehende, lediglich über einen Reibkontakt in der Aufnahme fixierte Lagerring des Einrücklagers zum Verdrehen gegenüber der Aufnahme, wodurch Zentrierungsvorgänge des Einrücklagerrings gegenüber dem Kolben zu einem entsprechenden Verschleiß führen. Daher ist es bekannt, Verdrehsicherungen zwischen dem nicht drehenden Lagerring und dem Beaufschlagungsteil vorzusehen, die eine Verdrehung verhindern.

Es sind dabei reibschlüssig und formschlüssig wirkende Verdrehsicherungen bekannt. Bei Erhöhung der Schleppmomente, insbesondere bei tiefen Temperaturen, besteht bei reibschlüssigen Verdrehsicherungen die Gefahr des Rutschens, während bei formschlüssigen Verdrehsicherungen die Gefahr der Zerstörung der Verdrehsicherung und Beschädigung der Betätigungseinheit nicht auszuschließen ist. Eine Doppelkupplung umfasst zwei im Wesentlichen separate Kupplungseinheiten, die unabhängig voneinander über jeweils eine

Einrückvorrichtung eine Verbindung zu je einer Getriebeeingangswelle unterbrechen und herstellen können. Ein bevorzugtes Einsatzgebiet einer solchen Doppelkupplung ist die Kombination mit einem Doppelkupplungsgetriebe. Die erste Kupplungseinheit bedient hierbei beispielsweise die ungeraden Gangstufen und die zweite Kupplungseinheit die geraden Gangstufen. Auf diese Weise kann, während über die eine Kupplungseinheit aktuell Drehmoment vom Motor auf das Getriebe übertragen wird, bereits eine andere Gangstufe vorgewählt wer\ den, um anschließend ohne Unterbrechung der Zugkraft von der aktuellen Gangstufe in die vorgewählte Gangstufe schalten zu können. Die Getriebeeingangswelle ist hierfür meist aus zwei konzentrischen Wellen aufgebaut, das heißt aus einer Hohlwelle und einer innen liegenden Vollwelle.

Eine solche Doppelkupplung ist beispielsweise aus der DE 10 2009 053 486 A1 bekannt. Zur Betätigung der einzelnen Kupplungseinheiten sind hier zwei konzentrisch zueinander angeordnete, mit Einrücklagern in Wirkverbindung stehende Nehmerzylinderkolben bzw. Stellkolben, das heißt ein innerer Nehmerzylinderkolben und ein äußerer Nehmerzylinderkolben, vorgesehen. Der innere und der äußere Nehmerzylinderkolben werden jeweils in einem gemeinsamen ringzylindrischen Nehmerzylindergehäuse geführt. Ein solcher Nehmerzylinder wird auch als CSC (Concentric Slave Cylinder) bezeichnet. Nach der Druckschrift DE 10 2009 053 486 A1 ist das die Schleppmomentenabstützung und die Verdrehsicherung gewährleistende Federelement in Form eines Federbleches ausgebildet, welches laschenförmige Erweiterungen aufweist. Diese Laschen hintergreifen die Erhebungen der Schleppmomentabstützung. Der Kolben ist so ausgebildet, dass die Schleppmomentabstützung über das Federblech durch Reibschluss mit dem Kolben erfolgt. Die Montage des Federbleches ist dabei sehr aufwendig.

Es ist weiterhin bekannt, dass für hydraulische CSC die Verdrehsicherung und die Kupplungsvorlast über die Vorlastfeder erfolgt. Die Vorlastfeder liegt konzentrisch über dem hydraulischen Betätigungszylinder und bildet einen Form- bzw. Reibschluss zum Gehäuse und zum Ausrücklager. Die Vorlastfeder hat meist 4 oder mehr Windungen und eine Vorlast von 100 N. Die Vorlast der Vorlastfeder ist gegen die Kupplung gerichtet. Durch die Vorlast dreht das Lager geräuscharm beziehungsweise mit geringem Schlupf zur Kupplung. Dieses Design hat sich bisher als eine vorteilhafte Lösung erwiesen.

Für Anwendungsgebiete, in denen ein begrenzter Bauraum zur Verfügung steht, sind die vorgenannten Lösungen nicht geeignet.

Aus der DE 10 2009 034 399 A1 ist ein Ausrücksystem gemäß dem Oberbegriff des Patentanspruchs 1 bekannt.

Aufgabe der Erfindung ist es, ein Ausrücksystem zur Betätigung einer Kupplung zu entwickeln, welches eine Schleppmomentenabstützung des Einrücklagers gewährleistet und einen nur geringen Bauraumbedarf erfordert.

Diese Aufgabe wird mit den kennzeichnenden Merkmalen des ersten Patentanspruchs gelöst.

Vorteilhafte Ausgestaltungen ergeben sich aus den Unteransprüchen.

Durch das Ausrücksystem erfolgt erfindungsgemäß eine Abstützung eines Lagerschleppmomentes des Einrücklagers durch eine innerhalb des CSC wirkende Reibung.

Es werden somit erstmalig keine Federn zur Abstützung des Schleppmomentes verwendet, wodurch im Vergleich zu herkömmlichen Lösungen ein erheblicher Bauraumvorteil zu verzeichnen ist. Weiterhin verringert sich sie Anzahl der Bauteile, wodurch der CSC kostengünstig ist und sich der Montageaufwand reduziert.

Dieses System ist für die Betätigung von Doppelkupplungen prädestiniert.

Für die Betätigung einer Kupplung in Form einer Doppelkupplung weist das Ausrücksystem einen in einem Gehäuse entlang der Längsachse verschiebbaren ersten Kolben und einen zum ersten Kolben konzentrisch angeordneten und radial innen liegenden und entlang der Längsachse verschiebbaren zweiten Kolben auf, wobei der erste Kolben in Richtung zu einem ersten Druckraum eine erste Dichtung und der zweite Kolben in Richtung zu einem zweiten Druckraum eine zweite Dichtung aufweisen, der erste Kolben an dem der ersten Dichtung gegenüberliegenden Bereich auf ein radial außen liegendes erstes Einrücklager wirkt, der zweite Kolben an dem der zweiten Dichtung gegenüberliegenden Bereich auf ein radial innen liegendes zweites Einrücklager wirkt und wobei die Lagerschleppmomente des ersten und/oder zweiten Einrücklagers des CSC ebenfalls durch eine innerhalb des CSC wirkende Reibung erfolgt.

Dabei erfolgt eine Abstützung des Lagerschleppmomentes des ersten und/oder zweiten Einrücklagers durch die Reibung
- zwischen der ersten und/oder zweiten Dichtung und dem Gehäuse und/oder
- zwischen dem ersten und/oder zweiten Kolben und dem Gehäuse und/oder
- zwischen dem ersten und/oder zweiten Einrücklager und dem ersten/zweiten Kolben und/oder
- zwischen dem ersten und/oder zweiten Einrücklager und dem Gehäuse.

Weiterhin ist zur Abstützung des Lagerschleppmomentes des ersten und/oder zweiten Einrücklagers dieses verdrehgesichert mit dem ersten bzw. zweiten Kolben verbunden. Weiterhin ist die erste und/oder zweite Dichtung direkt oder über einen Dichtringträger mit dem zugehörigen ersten bzw. zweiten Kolben verdrehgesichert verbunden, so dass eine Reibung zwischen Kolben und Gehäuse gegen das Schleppmoment wirken kann.

Vorteilhafter Weise kann auch zwischen dem ersten und/oder zweiten Einrücklager und dem darauf wirkenden ersten/zweiten Kolben eine Rutschkupplung angeordnet sein.

Zur Erzeugung einer dem Schleppmoment entgegenwirkenden Reibung zwischen dem ersten und/oder zweiten Kolben und dem zugehörigen ersten/zweiten Einrücklager sind der/die Kolben an dem zum jeweiligen Einrücklager weisenden Bereich mit einer Durchmessererweiterung versehen. Die in Richtung zu den Einrücklagern weisenden Enden besitzen eine Durchmessererweiterung, die sich zwischen das Einrücklager und das Gehäuse erstreckt, so dass die Durchmessererweiterung in eingerückter Position des ersten/zweiten Kolbens formschlüssig am Gehäuse anliegt und bei einer wirkenden Vorlast durch das erste/zweite Einrücklager spielfrei gegen das Gehäuse geklemmt wird, wodurch die entsprechende Reibung zwischen Einrücklager und Kolben sowie zwischen Kolben und Gehäuse zu verzeichnen ist, die entgegen des Schleppmomentes wirkt. Durch die permanente Vorlast im System ist damit der Kolben zwischen Einrücklager und CSC-Gehäuse spielfrei geklemmt, so dass gleichzeitig mögliche Geräusche minimiert und das Spiel im Kolbensystem reduziert bzw. eliminiert werden.

Als Kontaktstellenmaterial zwischen ersten bzw. zweiten Einrücklager und darauf wirkenden ersten bzw. zweiten Kolben sowie zwischen ersten/zweiten Kolben und Gehäuse findet eine Metall/Kunststoffpaarung oder Kunststoff/Kunststoff Anwendung, welche die für die Ausnahme des Schleppmomentes erforderliche Reibung zwischen den Reibpartner gewährleistet. Weiterhin sollte die gewählte Reibpaarung die Geräusche reduzieren.

Dabei bestehen das Gehäuse aus Kunststoff oder Aluminium, der erste und/oder zweite Kolben aus Kunststoff und das erste/zweite Einrücklager aus Stahl.

Mit der radialen Erweiterung wirkt der erste und/oder zweite Kolben mit Endanschlag auf das Gehäuse und ist bei dem mit permanenter Vorlast wirkenden Betätigungssystem im Endanschlag zwischen Gehäuse und Ein bzw. Ausrücklager geklemmt. Das jeweilige erste und/oder zweite Einrücklager hat somit keinen Kontakt zum Gehäuse und liegt ausschließlich auf dem ersten/zweiten Kolben.

Die erfindungsgemäße Lösung ist für Anwendungen vorgesehen, in denen keine Vorlast für das Einrücklager notwendig ist und daher lediglich eine Lagerschleppmomentenabstützung erforderlich ist.

Die Erfindung wird nachfolgend anhand eines Ausführungsbeispiels und zugehöriger Zeichnungen näher erläutert. Es zeigen:
Figur 1 einen Längsschnitt einer ersten Variante durch einen CSF zur Betätigung einer Doppelkupplung mit einer Durchmessererweiterung des ersten/zweiten Kolbens,
Figur 2 einen Längsschnitt einer zweiten Variante durch einen CSF zur Betätigung einer Doppelkupplung mit einer Durchmessererweiterung des ersten/zweiten Kolbens,
Figur 3 einen Längsschnitt einer nicht erfindungsgemäßen Variante durch einen CSF zur Betätigung einer Doppelkupplung wobei erster und zweiter Kolben mit dem radial feststehenden Lagerring des Einrücklagers durch eine Schnappverbindung wirkverbunden sind.

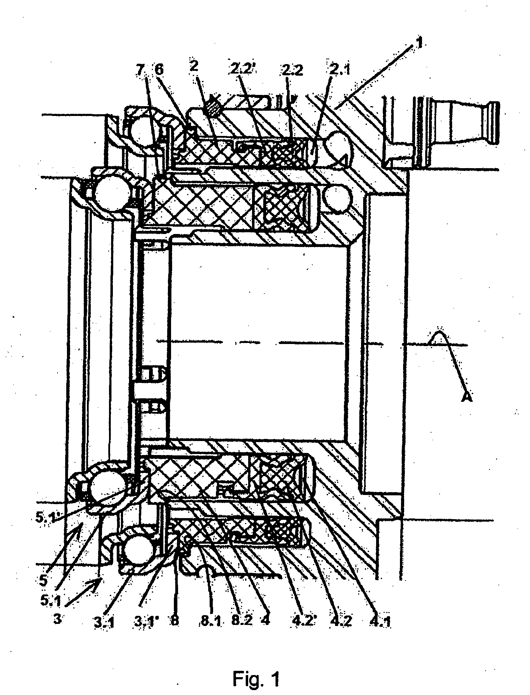

Die Kupplungsausrückvorrichtung ist gemäß Figur 1, 2 und 3 als CSC Concentric Slave Cylinder ausgebildet und dient zur Betätigung einer Doppelkupplung. Sie weist ein Gehäuse 1 auf, in welchem ein erster Kolben 2 in einem Druckraum 2.1 in Richtung zur Längsachse A verschiebbar angeordnet ist. An dem ersten Kolben 2 ist in Richtung zum ersten Druckraum 2.1 eine erste Dichtung 2.2 vorhanden, die über einen ersten Dichtringträger 2.2' mit dem ersten Kolben 2 verbunden ist. An dem der ersten Dichtung 2.2 gegenüberliegenden Ende wirkt der erste Kolben 2 auf einen ersten radial nach innen weisenden Bereich 3.1' des äußeren drehfesten ersten Lagerrings 3.1 eines ersten radial außen angeordneten Einrücklagers 3.

Konzentrisch innerhalb des ersten Kolbens 2 ist ein zweiter Kolben 4 in einem zweiten Druckraum 4.1 axial verschiebbar gelagert und über eine zweite Dichtung 4.2 zum zweiten Druckraum 4.1 abgedichtet, wobei die zweite Dichtung über einen zweiten Dichtringträger 4.2' mit dem zweiten Kolben 4.2 verbunden ist. An dem der zweiten Dichtung 4.2 gegenüberliegenden Ende wirkt der zweite Kolben 4 auf einen zweiten radial nach innen weisenden Bereich 5.1' des stehenden drehfesten zweiten Lagerrings 5.1 eines radial innen angeordneten zweiten Ausrücklagers 5.

Das Schleppmoment des ersten und zweiten Einrücklagers 3, 5 wird maßgeblich über die Reibung zwischen der ersten und zweiten Dichtung 2.2, 4.2 und dem Gehäuse 1 aufgenommen. Dafür können entsprechende Dichtungen eingesetzt werden die beispielsweise anstelle einer "einfachen" berührenden Dichtung als Labyrinthdichtung ausgebildet sind, um das erforderliche Reibmoment zum Gehäuse zu erzeugen.

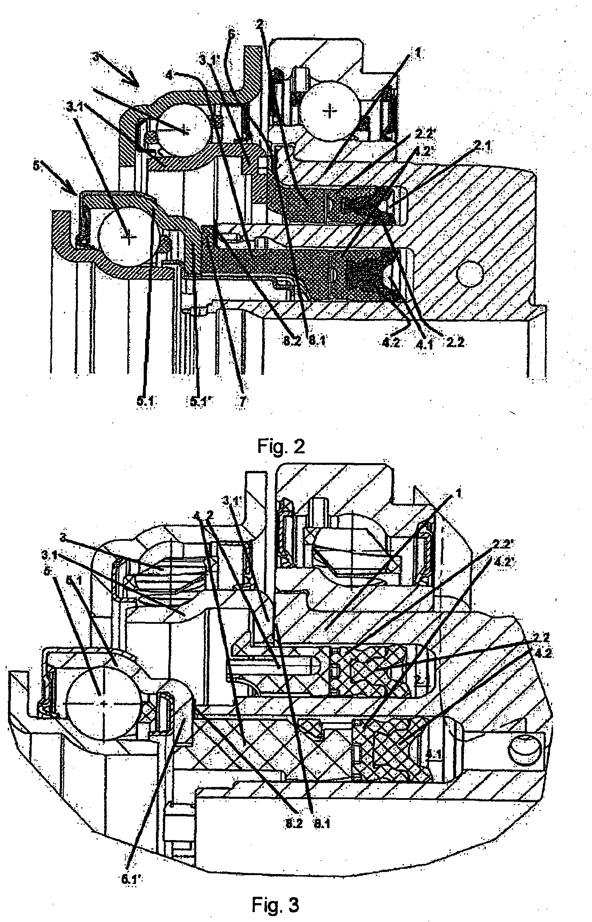

Gemäß Figur 1 und 2 wird das über die Dichtungen 2.2, 4.2 abgestützte Schleppmoment zusätzlich durch eine Reibung zwischen dem ersten und zweiten Kolben 2, 4 und dem Gehäuse 1 zusätzlich bei niedrigem Druck unterstützt. Dazu weist der erste Kolben 1 in Richtung zum ersten Einrücklager 3 eine radial nach außen weisende flanschartige erste Durchmessererweiterung 6 und der zweite Kolben 4 eine radial nach außen gerichtete flanschartige zweite Durchmessererweiterung 7 auf.

In Figur 1 greift die erste Durchmessererweiterung 6 in eine Ausnehmung 8 des Gehäuses 2 ein, so dass das Gehäuse 1 die radiale erste Durchmessererweiterung 6 zumindest teilweise noch umringt und die erste Durchmessererweiterung 6 an einem ersten stirnseitigen Bereich 8.1 des Gehäuses 1 anliegt.

Der zweite Kolben 4 liegt mit seiner zweiten Durchmessererweiterung 7 an einem zweiten stirnseitigen Bereich 8.2 des Gehäuses 1 an.

Im Unterschied dazu wird in Figur 2 die erste Durchmessererweiterung 6 nicht vom Gehäuse 1 umringt und somit liegen hier die erste und zweite Durchmessererweiterung 6, 7 jeweils nur an einem ersten und zweiten stirnseitigen Bereich 8.1, 8.2 des Gehäuses 1 an.

Die erste und zweite Durchmessererweiterung 6, 7 des ersten und zweiten Kolben stellen durch ihren in axialer Richtung auf das Gehäuse wirkenden Kontakt ein zusätzliches, dem Schleppmoment der Einrücklager 3, 5 entgegenwirkendes Schleppmoment entgegen.

Zusätzlich werden dadurch das Spiel und die Geräuschentwicklung des Ausrücksystems reduziert, das der erste/zweite Kolben 2, 4 in der Min Extension einen Anschlag bildet, der zwischen dem ersten bzw. zweiten Ausrücklager 3, 5 bzw. dem ersten und zweiten Lagerring 3.1, 5.1 und dem Gehäuse 1 zur Anlage kommt und somit als Zwischenelement zur Verringerung von Spiel und Geräusch dient.

Besonders vorteilhaft ist dabei sowohl für das Erzeugen des Reibmoments als auch für die Geräuschreduzierung, dass der erste/zweite Kolben formschlüssig in ihrer Endposition auf das Gehäuse 1 anschlagen (s. insbesondere Figur 2). Somit liegt das erste/zweite Einrücklager 3, 5 mit dem drehfesten ersten/zweiten Lagerring 3.1/5.1 in Endposition an dem ersten/zweiten Kolben 2, 4 an, der wiederum mit der ersten/zweiten Durchmessererweiterung 2.3, 4.3 an dem Gehäuse 1 anliegt. Durch die permanente Vorlast im System ist somit der erste/zweite Kolben 2, 4 zwischen erstem/zweitem Einrücklager 3, 5 und Gehäuse 1 spielfrei geklemmt. Als Kontaktstellenmaterial kann z. Bsp. Stahl (erstes/zweites Einrücklager 3, 5) zu Kunststoff (erster/zweiter Kolben 2, 4) und Kunststoff (erster/zweiter Kolben 2, 4) zu Aluminium (Gehäuse 1) gewählt werden.

Der erste und der zweite Lagerring 3.1, 5.1 des ersten und zweiten Ausrücklagers 3, 5 haben somit keinen Kontakt zum Gehäuse 1 und liegen ausschließlich am ersten/zweiten Kolben 2, 4 an, wodurch zusätzlich zur Reibung zwischen erster/zweiter Dichtung 2.2, 4.2 und Gehäuse 1 ein Reibmoment zwischen Gehäuse 1 und Kolben 2, 4 sowie zwischen Kolben 2, 4 und Einrücklager 3, 5 erzeugt wird, welches die Abstützung des Schleppmomentes unterstützt.

In Figur 3 liegt im Unterschied zu den Varianten gemäß Figur 1 und 2 der erste und zweite Lagerring 3.1, 5.1 mit ihrem ersten und zweiten nach innen weisenden Bereich 3.1' und 5.1' in der Position direkt an einem ersten und zweiten stirnseitigen Bereich 8.1, 8.2 des Gehäuses an. In diesem Fall wird das Schleppmoment bei niedrigem Druck zusätzlich zu der zwischen erster/zweiter Dichtung 2.2, 2.3 und Gehäuse 1 wirkenden Reibung durch die Reibung / Kontakt zwischen erstem/zweitem Lagerring 3.1, 5.1 und Gehäuse 1 unterstützt.

Erfindungsgemäß sind bei allen drei vorgenannten Ausführungsvariante Kolben, Dichtringträger und Dichtung drehfest miteinander verbunden.

Die erfindungsgemäße Lösung wird bevorzugt eingesetzt, wenn die nicht dargestellte Doppelkupplung in Schnüffelposition, bei welcher das System drucklos ist, eine Vorlast gegen die Einrücklager 3, 5 aufbringt. Dadurch ist keine Vorlast für die Einrücklager 3, 5 des SCS notwendig und es ist lediglich eine Schleppmomentenabstützung des ersten und zweiten Einrücklagers 3, 5 erforderlich, die erfindungsgemäß erstmalig ohne Federn und nur durch Reibpaarungen innerhalb des CSC realisiert wird.

### Bezugszeichenliste

- 1: Gehäuse
- 2: erster Kolben
- 2.1: erster Druckraum
- 2.2: erste Dichtung
- 2.2': erster Dichtringträger
- 2.3: erste Durchmessererweiterung
- 3: Einrücklager
- 3.1: erster Lagerring
- 3.1': erster nach innen weisender Bereich
- 4: zweiter Kolben
- 4.1: zweiter Druckraum
- 4.2: zweite Dichtung
- 4.2': zweiter Dichtringträger
- 4.3: zweite Durchmessererweiterung
- 5: zweites Ausrücklager
- 5.1: zweiter Lagerring
- 5.1': zweiter radial nach innen weisenden Bereich
- 6: erste Durchmessererweiterung
- 7: zweite Durchmessererweiterung
- 8: Ausnehmung
- 8.1: erster stirnseitiger Bereich des Gehäuses 1
- 8.2: zweiter stirnseitiger Bereich des Gehäuses 1

- A: Längsachse

## Patentansprüche

1. Ausrücksystem zur Betätigung einer Kupplung, wobei das Ausrücksystem in der Art eines CSC (Concentric Slave Cylinder) ausgebildet ist, bei dem in einem Gehäuse (1) ein entlang der Längsachse (A) verschiebbarer erster Kolben (2) und einem zum ersten Kolben (2) konzentrisch angeordneter und radial innen liegender und entlang der Längsachse (A) verschiebbarer zweiter Kolben (4) angeordnet sind,
- wobei der erste Kolben (2) an seinem in Richtung zu einem ersten Druckraum (2.1) weisenden Ende eine erste Dichtung (2.2) und der zweite Kolben (4) an seinem in Richtung zu einem zweiten Druckraum (4.1) weisenden Ende eine zweite Dichtung (4.2) aufweisen,
- der erste Kolben (2) an dem der ersten Dichtung (2.2) gegenüberliegenden Bereich auf ein radial außen liegendes erstes Einrücklager (3) wirkt,
- der zweite Kolben (4) an dem der zweiten Dichtung (4.2) gegenüberliegenden Bereich auf ein radial innen liegendes zweites Einrücklager (5) wirkt, und die Abstützung des Lagerschleppmomentes des ersten und/oder zweiten Einrücklagers (3, 5) des Ausrücksystems durch eine innerhalb des CSC wirkende Reibung erfolgt,
**dadurch gekennzeichnet, dass**
das jeweilige Einrücklager (3, 5) verdrehgesichert mit dem jeweiligen Kolben (2, 4) verbunden sind, und dass die jeweilige Dichtung (2.2, 4.2) direkt oder über einen Dichtringträger (2.2', 4.2') mit dem jeweiligen Kolben (2, 4) verdrehgesichert verbunden ist, wobei der erste und/oder zweite Kolben (2, 4) an ihrem zum ersten/zweiten Einrücklager (3, 5) weisenden Ende eine Durchmessererweiterung aufweisen, die sich zwischen das Einrücklager (3, 5) und das Gehäuse erstreckt,
wobei die Durchmessererweiterung in eingerückter Position des ersten/zweiten Kolbens (2, 4) formschlüssig am Gehäuse (1) anliegt und bei einer wirkenden Vorlast durch das erste/zweite Einrücklager (3, 5) spielfrei gegen das Gehäuse (1) geklemmt wird, als Kontaktstellenmaterial zwischen erstem/zweitem Einrücklager (3, 5) und erstem/zweitem Kolben (2, 4) sowie zwischen erstem/ zweitem Kolben (2,4) und Gehäuse (1) jeweils eine Metall/Kunststoffpaarung oder eine Kunststoff/ Kunststoffpaarung Anwendung findet, das Gehäuse (1) aus Kunststoff oder Aluminium besteht, **dass** der erste und/oder zweite Kolben (2, 4) aus Kunststoff besteht/bestehen, **dass** das erste/zweite Einrücklager (3, 5) aus Stahl besteht/bestehen.

2. Ausrücksystem nach Anspruch 1, **dadurch gekennzeichnet, dass** die Abstützung des Lagerschleppmomentes des ersten und/oder zweiten Einrücklagers (3, 5) durch die Reibung
- zwischen der ersten und/oder zweiten Dichtung (2.2, 4.2) und dem Gehäuse (1) und/oder
- zwischen dem ersten und/oder zweiten Kolben (2, 4) und dem Gehäuse (1) und/oder
- zwischen dem ersten und/oder zweiten Einrücklager (3, 5) und dem ersten/zweiten Kolben (2, 4) und/oder
- zwischen dem ersten und/oder zweiten Einrücklager (3, 5) und dem Gehäuse (1) erfolgt.

## Claims

1. A disengagement system for the actuation of a clutch, wherein the disengagement system is in the form of a CSC (Concentric Slave Cylinder), in which a first piston (2), which is displaceable along the longitudinal axis (A), and a second piston (4), which is arranged concentrically with respect to and situated radially to the inside of the first piston (2) and which is displaceable along the longitudinal axis (A), are arranged in a housing (1),
- wherein the first piston (2) has a first seal (2.2) at its end pointing in the direction of a first pressure chamber (2.1) and the second piston (4) has a second seal (4.2) at its end pointing in the direction of a second pressure chamber (4.1),
- the first piston (2) acts, at the region situated opposite the first seal (2.2), on a first engagement bearing (3) situated radially at the outside,
- the second piston (4) acts, at the region situated opposite the second seal (4.2), on a second engagement bearing (5) situated radially at the inside, and the bearing drag torque of the first and/or second engagement bearing (3, 5) of the disengagement system is supported by friction acting within the CSC,
**characterized in that**
the respective engagement bearing (3, 5) is connected to the respective piston (2, 4) in such a way that it is secured against rotation, and **in that** the respective seal (2.2, 4.2) is connected to the respective piston (2, 4) in such a way that it is secured against rotation, either directly or via a sealing ring carrier (2.2', 4.2'), wherein the first and/or second piston have a widened diameter at their end facing the first/second engagement bearing (3, 5), which extends between the engagement bearing (3, 5) and the housing,
wherein in the engaged position of the first/second piston (2, 4), the widened-diameter portion bears with a form fit against the housing (1) and, when a preload acts, said widened-diameter portion is clamped without play against the housing (1) by the first/second engagement bearing (3, 5), a metal/plastics pairing or a plastics/plastics pairing is used as contact material in each case between first/second engagement bearing (3, 5) and first/second piston (2, 4) and between first/second piston (2, 4) and housing (1), the housing (1) is composed of plastic or aluminium, **in that** the first and/or second piston (2, 4) is/are composed of plastic, **in that** the first/second engagement bearing (3, 5) is/are composed of steel.

2. The disengagement system according to claim 1, **characterized in that** the bearing drag torque of the first and/or second engagement bearing (3, 5) is supported by the friction
- between the first and/or second seal (2.2, 4.2) and the housing (1), and/or
- between the first and/or second piston (2, 4) and the housing (1), and/or
- between the first and/or second engagement bearing (3, 5) and the first/second piston (2, 4), and/or
- between the first and/or second engagement bearing (3, 5) and the housing (1).

## Revendications

1. Système de débrayage pour l'actionnement d'un embrayage, le système de débrayage étant en particulier réalisé à la manière d'un CSC (concentric slave cylinder - cylindre récepteur concentrique), dans lequel dans un boîtier (1) sont agencés un premier piston (2) déplaçable le long de l'axe longitudinal (A) et un second piston (4), agencé de manière concentrique par rapport au premier piston (2) situé radialement à l'intérieur et déplaçable le long de l'axe longitudinal (A),
- dans lequel le premier piston (2) présente, sur son extrémité tournée en direction d'une première chambre de pression (2.1) un premier joint d'étanchéité (2.2) et le second piston (4) présente, sur son extrémité tournée en direction d'une seconde chambre de pression (4.1) un second joint d'étanchéité (4.2)
- le premier piston (2) agit sur une première butée d'embrayage (3) située radialement à l'extérieur au niveau de la région opposée au premier joint d'étanchéité (2.2),
- le second piston (4) agit sur une seconde butée d'embrayage (5) située radialement à l'intérieur au niveau de la région opposée au second joint d'étanchéité (4.2), et le support du couple résistant de butée de la première et/ou seconde butée d'embrayage (3, 5) du système de débrayage est effectuée par une friction agissant à l'intérieur du CSC,
**caractérisé en ce que**
la butée d'embrayage respective (3, 5) est reliée au piston respectif (2, 4) de manière bloquée en rotation, et **en ce que** le joint d'étanchéité respectif (2.2, 4.2) est relié, directement ou par le biais d'un support de bague d'étanchéité (2.2', 4.2'), au piston respectif (2, 4) de manière bloquée en rotation, dans lequel le premier et/ou second piston (2, 4) présentent, sur leur extrémité tournée vers la première/seconde butée d'embrayage (3, 5), un élargissement de diamètre, qui s'étend entre la butée d'embrayage (3, 5) et le boîtier,
dans lequel l'élargissement de diamètre s'applique avec engagement par complémentarité de formes contre le boîtier (1) dans la position engagée du premier/second piston (2, 4) et, en cas d'action d'une précharge, est serré sans jeu contre le boîtier (1) par la première/seconde butée d'embrayage (3, 5), un appariement métal/plastique ou un appariement plastique/plastique est utilisé respectivement en tant que matériau de point de contact entre la première/seconde butée d'embrayage (3, 5) et le premier/second piston (2, 4) ainsi qu'entre le premier/second piston (2, 4) et le boîtier (1), le boîtier (1) est constitué de plastique ou d'aluminium, que le premier et/ou le second piston (2, 4) est/sont constitué(s) de plastique, que la première/seconde butée d'embrayage (3, 5) est/sont constituée(s) d'acier.

2. Système de débrayage selon la revendication 1, **caractérisé en ce que** le couple résistant de butée de la première et/ou de la seconde butée d'embrayage (3, 5) est supporté par la friction
- entre le premier et/ou le second joint d'étanchéité (2.2, 4.2) et le boîtier (1) et/ou
- entre le premier et/ou le second piston (2, 4) et le boîtier (1) et/ou
- entre la première et/ou la seconde butée d'embrayage (3, 5) et le premier/second piston (2, 4) et/ou
- entre la première et/ou la seconde butée d'embrayage (3, 5) et le boîtier (1).
